# EUROPEAN PATENT APPLICATION

(11) **EP 2 312 849 A1**
(43) Date of publication of application: **20.04.2011**
(21) Application number: 09290753.4
(22) Date of filing: 01.10.2009
(51) Int. Cl.: H04N 7/24

(54) **Methods, systems and devices for compression of data and transmission thereof using video transmisssion standards**

(71) Applicant: NXP B.V., 5656 AG Eindhoven (NL)
(72) Inventor: Lefebvre, Fabien, 5656 AG Eindhoven (NL); Lejoly, Patrick Edouard, 5656 AG Eindhoven (NL)
(74) Representative: Burton, Nick

(57) **Abstract**

Systems, devices and methods are implemented for compressing high-definition video content. Consistent with one such implementation, a device is implemented for preparing a media stream (106, 108) containing high-definition video content for transmission over a transmission channel (122, 124). A receiver unit (110) is arranged to receive the media stream in a high-definition encoding format that does not compress the high-definition video content contained therein. A decoder unit (112) is arranged to decode the media stream. A compression unit (114) is arranged to compress the decoded media stream to produce a compressed media stream. An encapsulation unit (116) is arranged to encapsulate the compressed media stream within an uncompressed video content format. An encoding unit (118, 120) is arranged to encode the encapsulated media stream using the high-definition format to produce a data stream and and may be arranged to encrypt the data stream, e.g., using High-Bandwidth Digital Content Protection (HDCP).

## Description

### Field of the Invention

The present invention relates generally to compression of video content, and more specifically, to transmission of video content by encapsulating compressed video.

### Background

High-Definition (HD) signals are typically transmitted from one system to another using cables carrying DVI (Digital Visual Interface) or HDMI (High-Definition Multimedia Interface) signals. HD video refers to any video of higher resolution than standard definition video (*e.g*., display resolutions of 480i/480p). HD video resolutions include 1280x720 pixels (720p) and 1920x1080 pixels (1080i/1080p). Conventionally, DVIIHDMI signals are conveyed using a signaling scheme known as Transition Minimized Differential Signaling (TMDS). In TMDS, video, audio, and control data are carried on three TMDS data channels with a separate TMDS channel for carrying clock information. HDMI supports video signals at resolutions up to (and beyond) 1080p at 60 Hz (and higher) refresh rates as well as up to 8 channels of full-resolution digital audio. Additionally, DVI/HDMI systems include a separate bi-directional channel known as the Display Data Channel (DDC) for exchanging configuration and status between a source and a sink, including information needed in support of High-Bandwidth Digital Content Protection (HDCP) encryption and decryption. In HDMI, an optional Consumer Electronic Control (CEC) protocol provides high-level control functions between audiovisual devices:

Conditioning signals for reliable transmission between audiovisual devices results in multi-Gbps communications data rates for video resolutions such as 720p, 1080i, and 1080p. However, the high data rates for HD signals (*e.g*., up to 10.2 Gbps for the HDMI version 1.3 specification) often limit the distance over which HD signals can be reliably communicated between audiovisual devices. It is also important to maintain support for HDCP encryption of transmitted content. This is the case due to the significance of HDCP as a protocol approved by MPAA (Motion Picture Association of America) and FCC (Federal Communications Commission) for securely transferring uncompressed DVI/HDMI content, and the fact that certain sources and displays may not support non-HDCP encrypted HD content or may default to non-HD resolutions (*e.g*., 480p) in the absence of HDCP encryption.

### Summary

Consistent with an example embodiment of the present invention, video content is provided from a video source to another audiovisual device. The video content is compressed prior to transmission from the video source to the other audiovisual device, thus allowing the video content to be sent at a lower data rate than would be required for the uncompressed video content. The high data rates for HD signals often limit the distance over which HD signals can be reliably communicated between devices. The compression of the video content enables transmission of HD signals over greater distances than the uncompressed video content. Other aspects of the present invention allow for use of various encryption techniques that are not designed for use with compressed video content. In a particular example, the transmission is encrypted using High-Bandwidth Digital Content Protection (HDCP).

Although not limited thereto, aspects of the present invention are particularly well-suited for significantly reducing the data size for video-based media content while maintaining compatibility with transmission standards not designed for use with various compression techniques. In a particular example, the transmission is also encrypted *e.g*., using High-Bandwidth Digital Content Protection (HDCP). This allows for transmission of high-quality video-based media content using transmission standards and encryption techniques that are designed for lower-quality video-based media content. Aspects of the present invention are therefore particularly useful for bandwidth-limited environments, transmission of multiple video streams using a standard designed for a single video stream and/or backward-compatibility with previous standards and techniques.

An embodiment of the present invention is directed to a method for preparing a media stream containing high-definition video content for transmission over a transmission channel. The method includes receiving the media stream in a high-definition encoding format that does not compress the high-definition video content contained therein. The media steam is then decoded. The decoded media stream is compressed to produce a compressed media stream. The compressed media stream is encapsulated within an uncompressed video content format. The encapsulated media stream is encoded using the high-definition format to produce a data stream. In some instances, the media stream can also be encrypted.

Consistent with an embodiment of the present invention, a device is implemented for preparing a media stream containing high-definition video content for transmission over a transmission channel. A receiver unit is arranged to receive the media stream in a high-definition encoding format that does not compress the high-definition video content contained therein. A decoder unit is arranged to decode the media steam. A compression unit is arranged to compress the decoded media stream to produce a compressed media stream. An encapsulation unit is arranged to encapsulate the compressed media stream within an uncompressed video content format. An encoding unit is arranged to encode the encapsulated media stream using the high-definition format to produce a data stream.

According to another embodiment of the present invention, a device is implemented for preparing an un-coded media stream containing high-definition video content for transmission over a transmission channel. A compression unit is arranged to compress, using interframe compression, the un-coded media stream to produce a compressed media stream. An encapsulation unit is arranged to encapsulate the compressed media stream within an uncompressed video content format. An encoding unit is arranged to encode the encapsulated media stream using a high-definition format to produce a data stream.

The above summary is not intended to describe each embodiment or every implementation of the present disclosure. The figures and detailed description that follow more particularly exemplify various embodiments.

### Brief Description of the Drawings

The invention may be more completely understood in consideration of the following detailed description of various embodiments of the invention in connection with the accompanying drawings, in which:
FIG. 1A shows a block diagram of a system for providing video content from a video source to a display device, according to an example embodiment of the present invention;
Fig. 1B depicts a block diagram of a system for providing video content from a video source to a display device, according to another example embodiment of the present invention;
FIG. 2 shows a flow diagram of a method for providing video content from a video source to a display device, according to an example embodiment of the present invention;
FIG. 3 depicts formatting of video content data, consistent with an embodiment of the present invention; and
FIG. 4 depicts an example implementation for transmission of multiple media streams within a single HDMI/HDCP protocol, according to an example embodiment of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention including aspects defined by the appended claims.

### Detailed Description

The present invention is believed to be applicable to a variety of different types of processes, devices and arrangements for use with high-definition (HD) video signals, including, but not limited to, approaches for using HDMI encoded and/or HDCP encrypted HD video signals. While the present invention is not necessarily so limited (*e.g*., DVI (+HDCP) or DisplayPort (+HDCP)), various aspects of the invention may be appreciated through a discussion of examples using this context.

Aspects of the present invention are particularly well-suited for significantly reducing the data size for video-based media content while maintaining compatibility with transmission standards not designed for use with various compression techniques. This allows for transmission of high-quality video-based media content using transmission standards that are designed for lower-quality video-based media content. Aspects of the present invention are therefore particularly useful for bandwidth-limited environments, transmission of multiple video streams using a standard designed for a single video stream and/or backward-compatibility with previous standards.

HDCP and HDMI encoding is generally accepted as being incompatible with many compression techniques including those that use interframe compression. For instance, MPEG encoding techniques (*e.g*., H.264) achieve higher compression rates by using information from multiple frames to predict temporal redundancy between frames. The size of the resulting data, and indeed each image frame, is therefore dependent upon the success of the prediction, among other factors. HDCP and HDMI encoding is not designed for such variance. Moreover, the HDCP and HDMI encoding include control parameters (*e.g*., synchronization signals), which are not part of many compression schemes. Embodiments of the present invention allow for compressed data to be transmitted using standards such as HDCP and HDMI. While the present invention is not necessarily so limited to a particular standard or version of a standard, various aspects of the invention may be appreciated through a discussion of examples in the context of HDCP and HDMI.

Consistent with an example embodiment of the present invention, video content is provided from a video source to another audiovisual device. The video content is compressed prior to transmission from the video source to the other audiovisual device, thus allowing the video content to be sent at a lower data rate than would be required for the uncompressed video content. The high data rates for HD signals often limit the distance over which HD signals can be reliably communicated between devices. The compression of the video content enables transmission of HD signals over greater distances than the uncompressed video content.

In a particular implementation, the uncompressed video content is provided by the source device to a transmitter-formatter, which compresses the video content. The compression of the video content can be performed using any one of a various interframe lossless or lossy compression techniques (*e.g*., H.264 and MPEG 2/4). The compressed data is then treated as raw data and formatted to include headers and/or footers, as necessary, to correspond to uncompressed video content. This process is called data encapsulation, because the entire contents of the higher-layer message (compressed video format) are encapsulated as the data payload of the message at the lower layer (uncompressed video format). The transmitter-formatter encapsulates the compressed video content to conform to uncompressed video content. For example, the transmitter-formatter places the compressed video content into packets and adds additional pseudo information, such as one or more of horizontal and vertical synchronization pulses and blanking. The encapsulation of the compressed video content enables compatibility with encryption formats, such as HDCP, that are not (directly) compatible with interframe compression techniques. Aspects of the present invention allow a 1080p HD signal to be transmitted at a reduced data rate without the need to downscale the image quality to a lower resolution (*e.g*., 720p) or to discard picture data (*e.g*., pixel bit width) that cannot be later reconstructed from the compressed HD signal via decompression. As used herein, merely discarding data is not compression of data. Moreover, decompression of data represents more than simply upconverting from a lower resolution to a higher resolution using automatic pixel fill techniques that do not reverse a compression scheme. The transmitter-formatter then encodes the encapsulated video content for transmission to the other audiovisual device.

As an example, the raw/decoded data could be compressed using interframe compression of various standards, *e.g*., MPEG, H.263 or H.264. HDMI is not (directly) compatible with the interframe compressed data. For example, the results of MPEG coding include a number of header-type information used for decoding of the data and the data sizes for frames can vary depending upon the effectiveness of the compression. Thus, the resulting compressed data does not correspond to uncompressed data that is transmitted via HDMI. The encapsulation, however, is implemented by treating the compressed data, including the header-type information, as binary data and thereby effectively overlooking the (MPEG) compression format. The binary compressed data is treated by the encapsulation unit as if the binary compressed data was raw-video data and formatted to the HDMI specification accordingly. Thus, the HDMI encoded signal cannot be directly decoded back to the original video image. Instead, the receiver further decompresses the data to reproduce raw/decoded data having the same resolution as the original raw/decoded data. For background information on HDMI encoding and decoding as well as aspects of error decection and conversion of RGB signals to YUV signals and to handling of unorganized data trains, reference can be made to *Video Transmission over a Data Link with Limited Capacity,* International Publication No. WO 2007/107948, Driesen et al., filed March 19, 2007, which is fully incorporated herein by reference.

In another embodiment, information other than video data can be encapsulated and transmitted using the HDMI protocols. The encapsulation treats this data as if it were raw video data. For example, the information could relate to the compression technique used, messages between devices or code updates for the receiving device.

In one implementation, the video content provided by the video source is an HDCP encrypted HDMI signal that also includes audio and control information. In this instance, the transmitter-formatter decodes and decrypts the HDMI signal before processing the video content. After processing the video content, the transmitter-formatter HDCP encrypts the processed video content along with the audio and control information prior to transmission to the other audiovisual device.

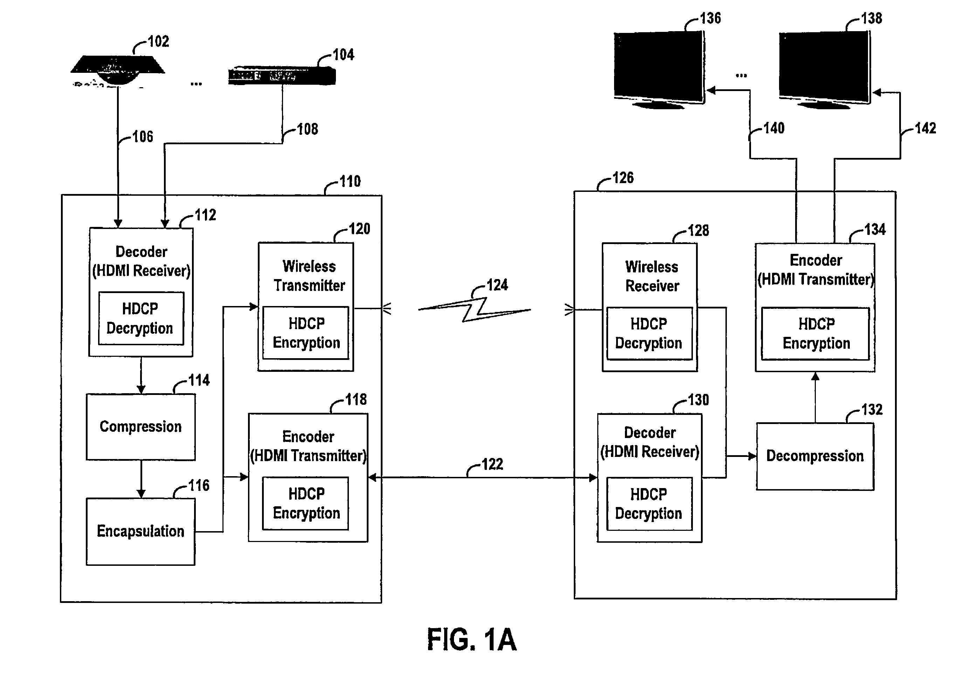

FIG. 1A shows a block diagram of a system for providing video content from a video source to a display device, according to an example embodiment of the present invention. The system includes one or more video sources, such as cable/satellite set-top-box 102 and HD disc player 104 such as a Bluray player or a HD-DVD player. The video sources 102 and 104 each include an HDMI transmitter that receives video, audio and control information, encrypts and TMDS encodes the received signals, and transmits the encrypted signals over an HDMI cable 106 or 108 to transmitter formatter 110. The encrypted signals are transmitted on three TMDS data channels with a fourth TMDS channel carrying clock information. In one implementation, the video sources 102 and 104 each include an embedded transmitter-formatter 110. In this implementation, the video sources 102 and 104 are connected to their respective transmitter-formatters via board traces instead of HDMI cables 106 and 108.

The transmitter-formatter 110 includes a decoder 112 having a HDCP decryption module. The decoder (HDMI receiver) 112 converts the received TMDS signals to generate video, audio and control signals and the decoder 112 performs HDCP decryption on the generated signals. The decrypted video, audio and control signals are provided to compression module 114, which compresses the video signal using any suitable compression format, for example, H.264 or MPEG-2 compression. In one implementation, the compression module 114 can also compress the audio signal. In the instance where the transmitter-formatters 110 are embedded in the video sources 102 and 104, the video sources 102 and 104 can provide the video, audio and control information directly to the compression module 114 without the need for the intervening encoding/decoding and encryption/decryption steps discussed above.

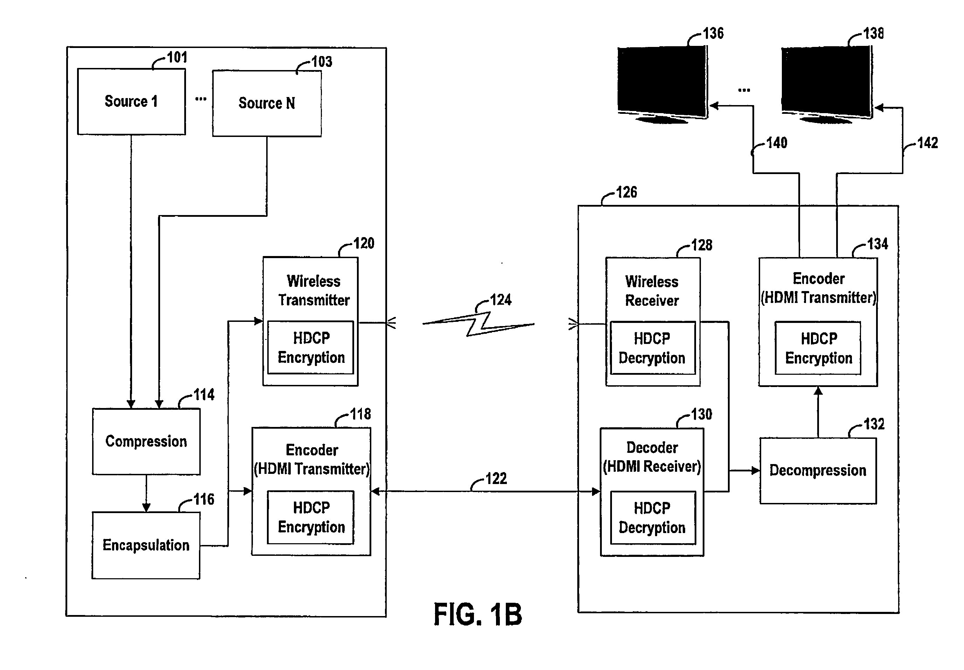

The compressed video signal and the audio and control signals are provided to encapsulation module 116, which encapsulates the compressed video signal to conform to an uncompressed video signal. The encapsulated video signal and the audio and control signals are provided to encoder (HDMI transmitter) 118 and wireless transmitter 120. The encoder 118 has a HDCP encryption module that is used to encrypt the video, audio and control signals and the encoder 118 TMDS encodes the encrypted signals for transmission across HDMI cable 122. The wireless transmitter 120 includes a HDCP encryption module that is used to encrypt the video, audio and control signals and the wireless transmitter-formatter 120 performs any processing (*e.g*., encoding and modulation) required to prepare the signals for wireless transmission as HDCP encrypted wireless signals across wireless link 124. This can be particularly useful for applications that use a wireless transmission scheme designed for non-compressed video and that use encryption, such as encrypting using HDCP1.x (*e.g*., a 60GHz transmission as defined by ECMA/ISO). In the embodiment illustrated in FIG. 1, the transmitter-formatter 110 includes both the encoder 118 and the wireless transmitter 120; however, the transmitter-formatter 110 could include just one of the encoder 118 and the wireless transmitter 120.

In one implementation, one of the input signals received from the video sources 102 and 104 is selected to be processed by the transmitter-formatter 110 and transmitted across HDMI cable 122 and/or wireless link 124. For example, a system user can select which one of the input signals is processed by the transmitter-formatter 110. In another implementation, the transmitter-formatter 110 can simultaneously process the different input signals received from the video sources 102 and 104. For example, the transmitter-formatter 110 processes the input signal from video source 102 using decoder 112, compression module 114 and encapsulation module 116, and provides the processed input signal to encoder 118 for transmission over HDMI cable 122. The transmitter-formatter 110 also includes an additional signal processing path consisting of an additional decoder, compression module and encapsulation module that process the input signal from video source 104 and that provide the processed input signal to the wireless transmitter 120 for transmission over wireless link 124.

The transmitter-formatter 110 is connected to a receiver-formatter 126 via the HDMI cable 122 and the wireless link 124. In the embodiment illustrated in FIG. 1, the transmitter-formatter 110 is connected to the receiver-formatter 126 by both the HDMI cable 122 and the wireless link 124; however, the transmitter-formatter 110 could only be connected to the receiver-formatter 126 by one of the HDMI cable 122 and the wireless link 124. The receiver-formatter 126 receives the signals transmitted by the transmitter-formatter 110 over the HDMI cable 122 and the wireless link 124. The receiver-formatter 126 includes a wireless receiver 128 that processes the HDCP encrypted wireless signals received over the wireless link 124. For example, the wireless receiver 128 demodulates and decodes the received wireless signals to generate HDCP encrypted video, audio and control signals. The wireless receiver 128 also includes an HDCP decryption module that is used to decrypt the encrypted signals.

The receiver-formatter 126 also includes a decoder (HDMI receiver) 130 that processes the HDCP encrypted TMDS encoded signals received over the HDMI cable 122. The decoder 130 converts the received TMDS signals to generate video, audio and control signals and the decoder 130 includes an HDCP decryption module that performs HDCP decryption on the generated signals. The decrypted video, audio and control signals generated by the wireless receiver 128 and the decoder 130 are provided to decompression module 132. In one implementation, the decrypted video, audio and control signals generated by one of the wireless receiver 128 and the decoder 130 are provided to decompression module 132 responsive to a user input.

The decompression module 132 decompresses the video signal by reconstructing the original video signal that was compressed by the compression module 114 of the transmitter-formatter 110. The decompressed video signal along with the audio and control signals are provided to encoder (HDMI transmitter) 134, which encrypts the video, audio and control signals using respective HDCP encryption modules and encodes the respective encrypted signals for transmission to display devices 136 and 138 via HDMI cables 140 and 142. The connections between the encoder 134 and one or more of the display devices 136 and 138 may have a maximum bit rate that is less than the bit rate of the decompressed video signal. In one embodiment, the encoder 134 down converts the decompressed video signal to match the maximum data rate of the connection (*e.g*., from 1080 lines to 720 lines). The encoder 134 can transmit the decompressed video signals at different bit rates to different ones of the display devices (*e.g*., 1080 to display device 136 and 720 to display device 138). The display devices 136 and 138 receive the TMDS encoded HDCP encrypted signals, decode and decrypt the received signals and process the signals for display. The system of FIG. 1 is shown as including display devices 136 and 138 such as flat panel LCD or plasma TVs for illustration purposes; however, the display devices 136 and 138 can be any device that receives HDMI signals including, for example, HDMI repeaters such as audio/video receivers.

In one implementation, the receiver-formatter 126 receives the input signal provided by the video source 102 over one of the HDMI cable 122 and the wireless link 124 and the receiver-formatter 126 receives the input signal provided by the video source 104 over the other one of the HDMI cable 122 and the wireless link 124. The user can then select which of the received signals is processed by decompression module 132 and encoder 134 for display on the display devices 136 and 138.

In another implementation, the transmitter-formatter 110 can transmit the HCDP encrypted signals wirelessly to multiple different receiver-formatters 126 and/or transmit the HCDP encrypted signals over multiple HDMI cables to multiple different receiver-formatters 126. An HDCP link is established as a one-to-one link between a transmitter and receiver using a pair of keysets of a transmitter and a receiver, respectively. Thus, the transmitter-formatter provides the function of multiple HDMI transmitters. In this instance, each of the different receiver-formatters 126 includes its own decoder 130 and/or wireless formatter 128 such that each of the receiver-formatters 126 can simultaneously process the signals received from the transmitter-formatter 110. Each of the different receiver-formatters 126 also has its own set of keys for decrypting the received signals.

In one embodiment, the receiver-formatter 126 can simultaneously process two different received signals. For example, the receiver-formatter 126 processes the signal received by the decoder 130 using decompression module 132 and encoder 134 and provides the processed signal to display device 136 over HDMI cable 140. The receiver-formatter 126 also includes an additional signal processing path consisting of an additional decompression module and encoder that process the signal received by the wireless receiver 128 and that provide the processed signal to display device 138 over HDMI cable 142. The user can select which of the input signals provided by the video sources 102 and 104 are displayed on each of the display devices 136 and 138.

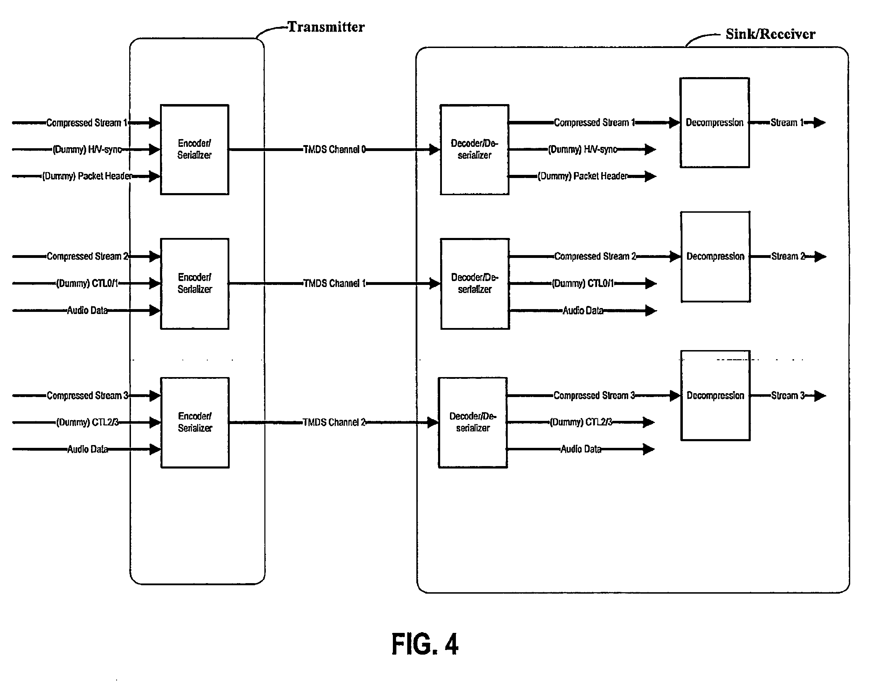

In another embodiment of the present invention, H.264 compression can achieve around a 75:1 reduction in bit rate over a 3.6 Gb/s 1080p60 stream. Accordingly, the HDMI specification does not limit the effective bit rate of the data to be transmitted. Moreover, even with additional overhead as part of the encapsulation and HDMI encoding, multiple data streams can be transmitted with less bandwidth. This can allow for two or more video streams to be encapsulated within a single HDMI transmission. This can be accomplished by interleaving the video streams prior to, or as part of, the encapsulation. The receiver then de-interleaves the data and decodes the streams as necessary. Various embodiments are discussed in more detail in relation to FIG. 4.

In another implementation, the display devices 136 and 138 each include an embedded receiver-formatter 126. In this implementation, the display devices 136 and 138 are connected to their respective receiver-formatter via board traces instead of HDMI cables 140 and 142. In the instance where the receiver-formatters 126 are embedded in the display devices 136 and 138, the decompression modules 132 of the receiver-formatters 126 can provide the video, audio and control signals directly to the display devices 136 and 138 without the need for the intervening encoding/decoding and encryption/decryption steps discussed above.

Fig. 1B depicts a block diagram of a system for providing video content from a video source to a display device, according to an example embodiment of the present invention. The system of FIG. 1B varies from that of FIG. 1A in that the video sources 101 and 103 provide data that does not require decoding. Thus, decoder 112 is not implemented or necessary, such as where the multiple sources are integrated in a single device with the transmitter. As technology advances, the complexity of devices increases and it becomes easier to consolidate many video sources that were previously considered separate devices. Accordingly, aspects of the present invention are particularly useful for such consolidation and expansion of functionality in transmitting devices.

A particular embodiment of the present invention allows for backward compatibility with older transmission standards and newer/higher resolutions. For instance, the transmitter can detect that the user is attempting to use a transmission medium (*e.g*., cable or wireless connection) that is not compatible with a (new) higher-resolution standard. The transmitter, however, also detects that both the video source and the receiver/display device are otherwise compatible with the higher-resolution standard. The transmitter reduces the higher-resolution image through the compression techniques discussed herein and encapsulates the data according to a standard compatible with the transmission medium. The receiver then reverses this process, as discussed herein, and reproduces the higher-resolution video content.

According to another embodiment of the present invention, the devices are designed to be upgradable. For instance, the devices can receive firmware upgrades that allow for new (improved) compression techniques to be downloaded and used.

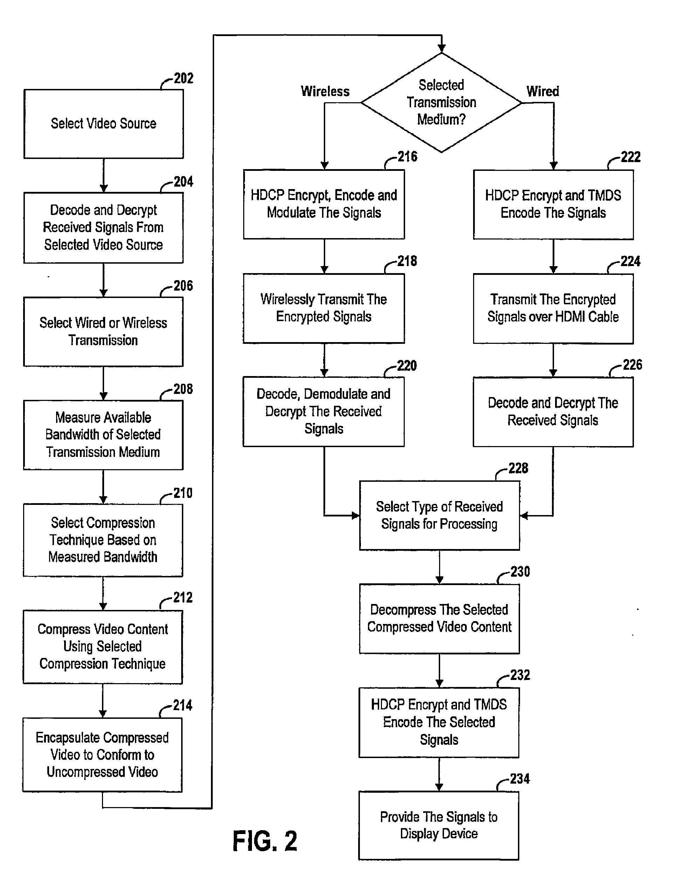

FIG. 2 shows a flow diagram of a method for providing video content from a video source to a display device, according to an example embodiment of the present invention.

The user or video source selects the desired video source for the video content at step 202 since there can be multiple video sources as shown in FIGS. 1A and 1B. For instance, the transmitter can include a button, touch-screen, radio-frequency (RF) input or network input that the user can use to select the desired video source. In some instances, the transmitter can automatically select the video content, *e.g*., in response to the presence or absence of a video signal. As discussed herein, this selection can include selection of multiple video sources that can be encapsulated into a single HDMI transmission.

The selected video source provides the video content as an encoded and encrypted signal (*e.g*., TMDS encoded and HDCP encrypted) that can also include audio and control information. The received signals from the selected video source are decoded and decrypted at step 204 to generate video, audio and control signals. Embodiments of the present invention also allow for a receiver to receive raw video data directly from the video source thereby alleviating the need for step 204.

At step 206, the user can select whether the video content will be transmitted by a wired or wireless connection to the display device, or via some other transmission method or medium. The transmitter can also automatically make the selection. For instance, the transmitter can make the selection based upon the presence of a cable and/or the required/available bandwidth for wireless transmission. As another example, the transmitter can automatically select the transmission medium using extended display identification data (EDID) provided by a display device and/or specific data packets added to the HDMI media stream by the source device.

Optionally, the available bandwidth of the selected transmission medium is measured or determined at step 208. This allows the transmitter to determine whether or not compression is necessary and/or how much compression is necessary. Thus, the transmitter selects the compression technique based on the measured bandwidth at step 210. The transmitter next compresses the video content using the selected compression technique at step 212.

The transmitter then encapsulates the compressed video at step 214. The encapsulation can include formatting the data to match the HDMI/HDCP data format. This can include, for example, adding horizontal and vertical synchronization pulses.

Depending upon the selected transmission type, the transmitter encodes the encapsulated data. As a wireless example, the transmitter HDCP encrypts the encapsulated data and then encodes and modulates the encrypted data at step 216. The transmitter then wirelessly transmits the encrypted signal at step 218. A receiver then reverses the modulation, encryption and encoding steps at step 220. As a wired example, the transmitter HDCP encrypts and TMDS encodes the encapsulated data at step 222. The transmitter then transmits the encrypted signals over an HDMI cable at step 224. The receiver decodes and decrypts the transmitted signals at step 226. Optionally, a selection is made, step 228, of either the signals received via the wireless connection or the signals received via the wired connection for further processing by the receiver. For example, a user input can be used to select the type of received signal that is processed by the receiver. In other embodiments discussed herein, the receiver processes the signals received via both the wireless and wired connections. The receiver takes the decrypted video signal and performs decompression at step 230. If necessary, the receiver can then HDCP encrypt and TMDS encode the selected signals, step 232, for transmission to a display device, step 234.

Consistent with one embodiment of the present invention, an additional step can be implemented after compression step 212. Many compression techniques vary in the effectiveness of the compression depending upon the video content. Thus, the receiver can determine the size of the compressed data and use this information to determine the desired (HDMI) resolution level (*e.g*., 720 vs. 1080). In this manner the receiver can determine the bandwidth necessary to transmit the compressed data and select a HDMI level with sufficient bandwidth.

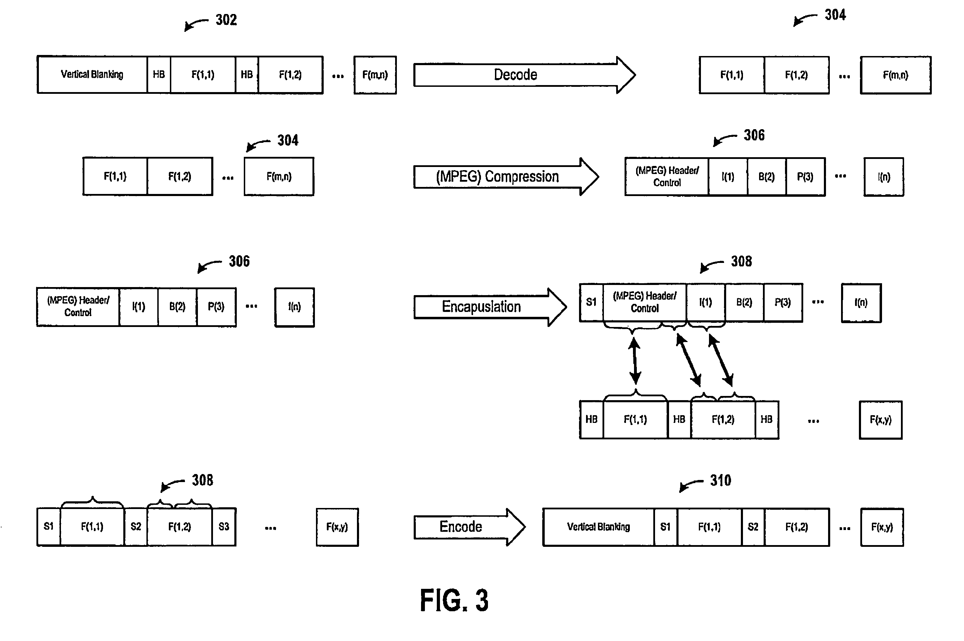

FIG. 3 depicts formatting of video content data, consistent with an embodiment of the present invention. HDMI defines packets falling within three different types: data island, video data and control. Data island packets are used to transmit audio data, and possibly other data. Video data packets include pixel data for a currently active display line. Control packets separate video data packets from data island packets. The representation of FIG. 3 depicts a simplification of this structure to show the general concept. Block 302 represents an HDMI data structure having a vertical blanking period during which control packets and data packets are sent. Also within block 302 are horizontal blocking periods (HB) which also include sending of control packets and data packets. The video packets are represented by F(m,n), where n represents a line of data and m represents a frame.

The transmitting device decodes the data block 302 to produce pixel information for each pixel and corresponding frame as shown by block 304. The transmitting device takes the decoded block 304 and compresses the data. In the particular example shown here, the data is compressed using an H.264 compatible compression scheme. This results in a series of compressed frames 306 and more particularly includes interframes, such as P and B frames. The compressed frames 306 are then encapsulated to produce a data structure 308 that is formatted to appear as uncompressed video data, such as that of block 304. This includes placement of both the (I, P and B) frames and the compression-related control/header data into the format of the uncompressed video data. As shown in FIG. 3, the components of the compressed data will likely not conform exactly to the size and structure of the uncompressed data format.

The encapsulation can include splitting the compressed frames across different lines/frames or packets. The encapsulation can also (or alternatively) add artificial data that does not affect operations or "dummy" data to align the compressed frames with the uncompressed format. Other encapsulation steps include the addition of other types of dummy data, such as vertical/horizontal synchronization pulses, vertical/horizontal blank periods and/or control signals (*e.g*., signals CTRL 0-3 of the HDMI specification). The synchronization pulses are defined with a specific relationship to the high-definition video content. For instance, the HDMI specification teaches that a vertical synchronization pulse is sent whenever the display should start scanning a new image from the top of the screen and a horizontal synchronization pulse is sent whenever the display should start scanning a new line. For encapsulation discussed herein, however, the vertical/horizontal synchronization pulses that are combined with the compressed frames do not necessarily have a corresponding relationship to the video content contained in the compressed frames. The encapsulation simply adds pseudo pulses without regard for the actual/original video image. Thus, the resulting encapsulated data looks like an uncompressed video stream in format despite the lack of correspondence between the pseudo data and the original video content.

Assuming the encapsulation results in a data stream that is consistent with the expected uncompressed data format, a standard HDMI/HDCP encoding/encrypting process can be implemented on the encapsulated data structure 308 to produce an HDMI-compliant signal 310.

Alternative implementations allow for the transmitting device to encapsulate and send data other than video/media content (non-media data) using a similar mechanism. For instance, software/firmware updates can be sent to the receiving device by encapsulating the update code into the HDMI specification. The can be particularly useful for transferring large amounts of data. While the HDMI specification includes a display data channel (DDC) in addition to the TMDS channels, this channel is relatively slow (*e.g*., less than 100 kHz) and is already used to communicate data other than video content between devices. Accordingly, the use of the TMDS channels to transmit other types of data can provide a high transmission bandwidth from transmitter to receiver for various types of data other than just media data.

FIG. 4 depicts an example implementation for transmission of multiple media streams within a single HDMI/HDCP protocol, according to an example embodiment of the present invention. HDMI encoding can use RGB (Red, Green and Blue), YC_{B}C_{R} 4:4:4 or YC_{B}C_{R} 4:2:2 encoding, where YC_{B}C_{R} is a digital representation using luma and color-different spaces. In place of this pixel data, however, individual media streams can be sent. Thus, the encapsulation involves substitution of each of the pixel components with a respective media stream. The output of each deserializer unit can be fed to a decompression unit to generate respective video/media streams.

In another embodiment of the present invention, multiple media streams are time-multiplexed across multiple TMDS differential pairs. For instance, a packet of a first stream can be transmitted on each of the TMDS differential pairs 1, 2 and 3. After this packet is transmitted, another packet of a different stream can then be transmitted on each of the TMDS differential pairs 1, 2, and 3. In another example, multiple packets are transmitted for each stream before switching to another media stream. In certain implementations, a tag can be added to each packet to indicate which data stream each packet belongs. A decoder then reconstructs the media stream using the tags to match the packets with the correct media stream.

Transmission of multiple media streams within a single HDMI transmission scheme can be particularly useful for a variety of applications. For instance, commercial settings often have multiple display devices. A single HDMI transmission can provide different video streams for each display device. This alleviates the need for separate HDMI receiver circuitry for each video stream, separate cabling and/or reduces the required wireless bandwidth. Another possible use is to allow for split screen or picture-in-picture display to be controlled by the display device.

Yet another potential advantage is to allow for fast switching between video sources. Because multiple video streams are already being provided within the HDMI transmission, the transmitting device does not need to initiate a new transmission stream for those video streams that are already being transmitted. This can help alleviate delays due to switching between video sources.

It should be apparent from the description herein that the various components discussed herein can be implemented using, for example, programmable logic devices, processors configured with executable software, discrete circuit logic and combinations thereof.

While the present invention has been described above and in the claims that follow, those skilled in the art will recognize that many changes may be made thereto without departing from the spirit and scope of the present invention. For example, while various ones of the above described examples discuss the transmission of video data using the HDMI standard, the techniques described herein can also be applied to other standards including, but not limited to, the DVI video interface standard and the DisplayPort digital display interface standard.

## Claims

1. A method for preparing a media stream (106, 108) containing high-definition video content for transmission over a transmission channel (122, 124), the method comprising:
receiving the media stream (106, 108) in a high-definition encoding format that does not compress the high-definition video content contained therein;
decoding the media steam (112);
compressing (114) the decoded media stream to produce a compressed media stream;
encapsulating (116) the compressed media stream within an uncompressed video content format;
encoding (118, 120) the encapsulated media stream using the high-definition format to produce a data stream; and
encrypting (118, 120) the encapsulated media stream using High-Bandwidth Digital Content Protection (HDCP).

2. The method of claim 1, wherein the step of decoding the video content is implemented using a version of the high-definition format that provides a first bandwidth and the step of encoding the encapsulated media stream is implemented using a version of the high-definition format that provides a second bandwidth that is lower than that of the first bandwidth.

3. The method of claim 1, wherein encapsulating the compressed media stream includes combining additional data with the compressed media stream, the additional data including one or more of horizontal synchronization data and vertical synchronization data.

4. The method of claim 3, wherein the horizontal and vertical synchronization data includes horizontal and vertical synchronization pulses that are not aligned to the received high-definition video content, and wherein the step of compressing further includes compressing the decoded media stream using interframe compression.

5. The method of claim 1, further including the step of modulating and encoding the encapsulated media stream for wireless transmission thereof.

6. The method of claim 1, wherein the step of encoding includes using High-Definition Multimedia Interface (HDMI).

7. The method of claim 1, further including the steps of determining the effective bandwidth of a transmission channel; and selecting a compression format as a function of the determined effective bandwidth.

8. The method of claim 1, further including the steps of
receiving another media stream in the high-definition encoding format that does not compress high-definition video content contained therein;
decoding the other media steam; and
compressing, using interframe compression, the other decoded media stream to produce another compressed media stream; and
wherein the step of encapsulating further includes encapsulating the other compressed media stream within the same uncompressed video content format as the first compressed media stream and the step of encoding the encapsulated media stream produces a single uncompressed video content media stream carrying both of the compressed media streams.

9. A device for preparing a media stream (106, 108) containing high-definition video content for transmission over a transmission channel (122, 124), the device comprising:
a receiver unit (110) arranged to receive the media stream in a high-definition encoding format that does not compress the high-definition video content contained therein;
a decoder unit (112) arranged to decode the media steam;
a compression unit (114) arranged to compress the decoded media stream to produce a compressed media stream;
an encapsulation unit (116) arranged to encapsulate the compressed media stream within an uncompressed video content format, the encapsulation unit configured to encapsulate the compressed media stream by combining additional data with the compressed media steam, the additional data including one or more of horizontal synchronization data and vertical synchronization data (308); and
an encoding unit (118, 120) arranged to encode the encapsulated media stream using the high-definition format to produce a data stream.

10. The device of claim 9, wherein the encapsulation unit is further arranged to encapsulate the compressed media stream and non-media data within a pixel-data format that conforms to one of an RGB (Red, Green and Blue) format and a luma, color-difference format.

11. The device of claim 9, wherein the encoding unit is further arranged to encode the encapsulated media stream using High-Definition Multimedia Interface (HDMI).

12. The device of claim 9, wherein the encoding unit is further arranged to encrypt the encapsulated media stream using High-Bandwidth Digital Content Protection (HDCP), and wherein the horizontal and vertical synchronization data includes horizontal and vertical synchronization pulses that are not aligned to the received high-definition video content.

13. The device of claim 9, wherein the compression unit is further arranged to use interframe compression.

14. The device of claim 9, wherein
the receiver unit is further arranged to receive at least two additional media streams containing high-definition video content;
the decoder unit is further arranged to decode the at least two additional media steams;
the compression unit is further arranged to compress the at least two additional media streams; and
the encapsulation unit is further arranged to place the compressed media streams within pixel color or luma components of the high-definition format.

15. The device of claim 9, wherein
the receiver unit is further arranged to receive the media stream in a high-definition encoding format corresponding to High-Definition Multimedia Interface (HDMI) 1080; and
the encoder unit is further arranged to encode the encapsulated media stream in a high-definition encoding format corresponding to HDMI 720.

16. The device of claim 9, wherein the encoder unit is further arranged to encode the encapsulated media stream using Transition Minimized Differential Signaling (TMDS).

17. The device of claim 9, further including a wireless transmission unit for modulating an output of the encoding unit to generate wireless transmission signals.

18. A device for preparing an un-coded media stream containing high-definition video content for transmission over a transmission channel, the device comprising:
a compression unit (114) arranged to compress, using interframe compression, the un-coded media stream to produce a compressed media stream;
an encapsulation unit (116) arranged to encapsulate the compressed media stream within an uncompressed video content format; and
an encoding unit (118, 120) arranged to encode the encapsulated media stream using a high-definition format to produce a data stream.

19. The device of claim 18, wherein the encoding unit is further arranged to encode using a High-Definition Multimedia Interface (HDMI) format and to encrypt using a High-Bandwidth Digital Content Protection (HDCP) format, the encoding and encryption corresponding to a first video resolution for uncompressed data and wherein the compressed data is designed to be decompressed to a second resolution higher than the first resolution.

20. The device of claim 18, wherein the encapsulation unit is further configured to encapsulate the compressed media stream by combining additional data with the compressed media stream, the additional data including one or more of horizontal synchronization data and vertical synchronization data, wherein the horizontal and vertical synchronization data includes horizontal and vertical synchronization pulses that are not aligned to the high-definition video content.
